Europäisches Patentamt

(19) European Patent Office

Office européen des brevets

(11) EP 0 706 433 B1

## (12) EUROPEAN PATENT SPECIFICATION

(45) Date of publication and mention
of the grant of the patent:
**19.03.1997 Bulletin 1997/12**

(21) Application number: 94916024.6

(22) Date of filing: 06.05.1994

(51) Int. Cl.$^6$: **B23B 27/14**

(86) International application number:
**PCT/US94/04992**

(87) International publication number:
**WO 95/00272 (05.01.1995 Gazette 1995/02)**

(54) **INSERT CORNER GEOMETRY FOR IMPROVED SURFACE ROUGHNESS**

SCHEIDEINSATZECKENGEOMETRIE FÜR VERBESSERTE OBERFLÄCHERAUHIGKEIT

GEOMETRIE DU POINT D'ATTAQUE D'UN OUTIL DE TOURNAGE POUR AVOIR UNE SURFACE A
RUGOSITE AMELIOREE

(84) Designated Contracting States:
**AT BE CH DE ES FR GB IT LI NL SE**

(30) Priority: **25.06.1993 US 83150**

(43) Date of publication of application:
**17.04.1996 Bulletin 1996/16**

(73) Proprietor: **KENNAMETAL INC.**
**Latrobe, PA 15650 (US)**

(72) Inventors:
• **VANKIRK, John, S.**
**Murrysville, PA 15668 (US)**
• **MASSA, Ted, R.**
**Latrobe, PA 15650 (US)**

• **HAMERSKI, Ronald, E.**
**Ligonier, PA 15658 (US)**

(74) Representative: **Schwepfinger, Karl-Heinz, Dipl.-Ing.**
**Prinz & Partner,**
**Manzingerweg 7**
**81241 München (DE)**

(56) References cited:
**EP-A- 0 489 701          DE-A- 2 610 097**
**GB-A- 2 104 421          US-A- 4 214 847**

• **PATENT ABSTRACTS OF JAPAN vol. 9, no. 297
(M-432) (2020) 25 November 1985 & JP,A,60 135
104 (TOSHIBA TUNGALOY) 18 July 1985**

## Description

## BACKGROUND OF THE INVENTION

The present invention generally relates to a cutting insert geometry for use in machining during turning operations. More particularly, the present invention relates to an insert with a modified corner geometry having different radii to provide an improved surface roughness.

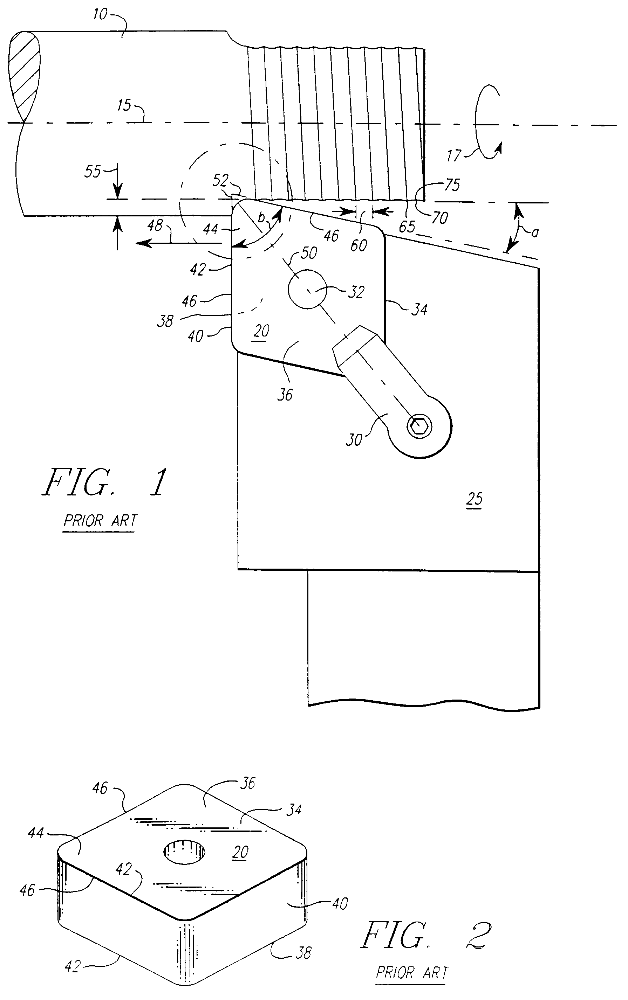

Figure 1, which is prior art, shows a typical turning application for machining, in which a workpiece 10 is rotated about a centerline 15 in the direction shown by arrow 17 by a device such as a lathe. A cutting insert 20 may be securely held within a toolholder 25 by means such as a clamp 30 which holds the insert 20 about a mounting pin 32 within the pocket of the toolholder 25.

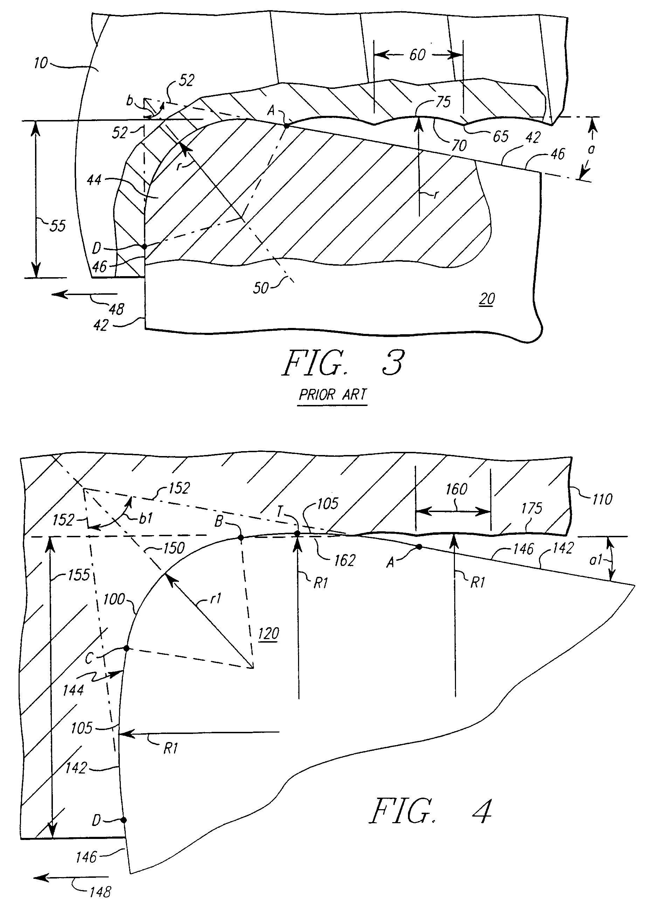

As seen in Figures 1 and 2, the cutting insert 20 is generally comprised of a polygonal body 34 having a top surface 36 and a bottom surface 38 with a peripheral wall 40 therebetween. A cutting edge 42 is formed at the intersection of the peripheral wall 40 and the top surface 36. A cutting edge 42 may also be formed at the intersection of the peripheral wall 40 and the bottom surface 38.

The insert 20 has at least one corner region 44 which is connected by side segments 46. Figure 3 shows magnified the encircled portion of Figure 1. During a machining operation, the corner region 44 contacts the workpiece 10. Additionally, a portion of the side segment 46 of the insert 20 may contact the workpiece 10. To accomplish this, the insert 20 is oriented so that the side segment 46 nearest the trailing edge of the insert 20 is angled away from the workpiece 10 at an angle a, known as the clearance angle, formed between the side segment 46 and the direction of feed 48, which is the direction the insert 20 is advanced into the workpiece 10 with each revolution of the workpiece 10. From inspection of Figures 1 and 3, it may also be seen that forwardmost portion of the corner region 44 engages the workpiece 10.

The corner region 44 may be symmetric about a bisector line 50, bisecting an angle b formed by the intersection of a line 52 extended from the cutting edge 42 of each adjacent side segment 46.

The toolholder 25 (Figure 1) is advanced toward the workpiece 10 until the cutting insert 20 penetrates the workpiece 10 surface to a certain depth. The amount the cutting insert 20 penetrates the workpiece 10, measured in a direction normal to the surface of the workpiece, is known as the depth of cut and is identified as item 55 in Figure 3.

The toolholder 25 is also advanced a certain distance with each revolution of the workpiece 10 such that material may be removed along a face of the workpiece 10. This movement occurs in the direction of feed 48 and is known as the feed rate indicated by item 60. Since the feed rate is the distance the insert 20 moves in one revolution of the workpiece 10, the units of feed rate are length.

Generally, cutting inserts, such as insert 20, have a corner region 44 comprised of a curved section of a single radius r as illustrated between points A and D in Figure 3. As a result of the insert 20 moving across the surface of the workpiece 10, material is removed from the workpiece 10 and the resulting surface contains a series of peaks 65 and valleys 70 defining scallops 75. As can be seen in Figures 1 and 3, the shape of the corner region 44 of the insert 20, which has radius r, is imparted to the workpiece 10 and the scallops 75 will, therefore, also have a radius r. It is the finish created on the workpiece 10 by these scallops which defines the surface roughness of the workpiece 10.

It is generally accepted that the surface roughness produced by an insert is primarily a function of the corner region radius and the feed rate. It can be appreciated that, if the feed rate 60 is decreased, the distance between peaks 65 and the height of each peak 65 will decrease, thereby providing an improved surface roughness.

However, improved surface roughness may also be accomplished by modifying the corner region of the insert. On an insert with a constant radius r in the corner region 44, the surface roughness, as provided on Page 168 of the book entitled "Fundamentals of Machining and Machine Tools," Second Edition, by Geoffrey Boothroyd and Winston Knight, is closely related to the feed rate and corner region radius by the following expression:

$$\text{Surface roughness} = \frac{0.0321 \times (\text{feed rate})^2}{\text{corner region radius}}$$

where the feed rate is in units of length (per revolution), the corner region radius is in units of length and the surface roughness is in units of length. As an example, if the feed rate is in inches (per revolution) and the corner region radius is in inches, the surface roughness will be in inches.

For the best surface roughness with a fixed feed rate, the corner region radius should be as large as possible. However, the cutting forces on the insert are the smallest when the corner region radius is the smallest. If the radius becomes too large, then, while the surface roughness improves the forces acting upon the cutting edge are higher. For this reason, a radius is selected that is a trade-off between these two factors.

United States Patent No. 4,990,036, to Ecklund et al., issued February 5, 1991, entitled "Cutting Insert," teaches a cutting insert with a main cutting edge for roughing operations and a secondary cutting edge for finishing operations. However, the secondary cutting edge is separated from the primary cutting edge by a clearance portion and by a difference in elevation, thereby requiring a minimum depth of cut before the primary cutting edge may be engaged and a minimum length of cut before the secondary edge is engaged. Additionally, a separation in distance between the primary and secondary cutting edges makes necessary precise angular positioning of the cutting insert and toolholder relative to the workpiece to properly engage the secondary cutting edge. Such an insert would have limited effectiveness in the corner region of a workpiece.

European Patent Application Publication Number EP 0 489 701 A3, representing the most relevant prior art, teaches a cutting insert used for a peeling operation that has a corner region with different radii to permit an improved surface finish but this insert is useful only in a single direction of feed.

It is an object of this invention to provide a cutting insert for turning applications which will provide an improved surface roughness over a range of feed rates relative to other inserts using a single radiused corner region and the same feed rates.

It is a further object of this invention to provide a cutting insert that would provide improved surface roughness and be compatible with currently existing toolholders.

It is a further object of this invention to provide a cutting insert which will provide an improved surface roughness and will also be indexable, thereby providing a multiple of corner regions that may be used.

It is a further object of this invention to provide a cutting insert for turning applications which will provide an improved surface roughness without significantly increasing cutting forces upon the cutting insert.

## BRIEF SUMMARY OF THE INVENTION

A cutting insert is claimed having the features of claim 1. Such insert has a polygonal body of wear resistant material for removing material from a workpiece at a depth of cut along a direction of feed at a feed rate in a turning operation. The cutting insert is comprised of top and bottom surfaces and a peripheral wall therebetween, a cutting edge formed at the intersection of the peripheral wall and the top surface, and at least one corner region and adjacent side segments.

The cutting edge of each corner is comprised of a penetrating segment and a finishing segment. The penetrating segment is defined by a radius and two ends for engaging a portion of the workpiece and producing a surface roughness. The finishing segment is defined by a radius greater than the penetrating segment which intersects with the end of the penetrating segment away from the direction of feed for producing an improved surface roughness.

A transition segment is introduced between the finishing segment and the side surface of the insert.

A finishing segment is bounded by two penetrating segments to provide the ability to machine in two directions and provide indexability to the cutting insert.

Each side of the insert cutting edge corner portion includes a finishing segment.

A surface having a series of continuously increasing radii is substituted for the single radius finishing segment and the penetrating segment is reduced in length such that the overall effect of the edge is one of an edge having a continuously increasing radius from a minimum of the penetrating segment radius to a maximum.

## BRIEF DESCRIPTION OF THE DRAWINGS

The exact nature of embodiments of the present invention will become more clearly apparent upon reference to the following detailed specification, taken in connection with the accompanying drawings, in which:

Figure 1 is prior art showing a plan view of a cutting insert engaging a workpiece in a turning operation.
Figure 2 is prior art showing details in perspective of the insert in Figure 1.
Figure 3 is prior art showing the encircled portion of Figure 1 in a magnified view.
Figure 4 is a magnified view of Figure 1, however, modified to show details of the first embodiment of the present invention.
Figure 5 shows a plan view of one embodiment of the insert corner portion in the present invention.
Figure 6 illustrates the insert corner portion shown in Figure 5 with permissible angular tolerance.
Figure 7 shows a plan view of a second embodiment of a cutting edge of the insert corner portion in the present invention.
Figure 8 illustrates a plan view of the third embodiment of the insert in which the corner portion is again modified.
Figure 9 shows details of the corner region of Figure 8.
Figure 10 illustrates a fourth embodiment not falling under the scope of claim 1 in which the corner region is not symmetrical.
Figure 11 illustrates a fifth embodiment not falling under the scope of claim 1 in which the finishing segment has a series of continuously increasing radii which smoothly blend with the penetrating segment and the side surface.

## DETAILED DESCRIPTION OF EMBODIMENTS OF THE INVENTION

With the realization, as shown in Figures 1-3, that the forwardmost portion of the corner region 44 penetrates the workpiece 10 and performs a majority of the cutting, it is then not imperative that portions other than the forwardmost portion of the corner region 44 maintain a relatively small radius which is ideal for cutting. Instead, the radius of the corner portion 44 away from the direction of feed 48 may be enlarged. Therefore, in accordance with the present invention, the radius for that portion of the corner region which initially penetrates the workpiece may be sized for optimization in cutting while the radius at the portion of the cutting insert away from that portion which initially penetrates the workpiece 10 may be sized to improve surface roughness. For convenience, the item numbering for different embodiments of this invention will be similar for similar parts of the prior art elements, but will be incremented by 100 for each embodiment.

Figure 4 shows one embodiment of the present invention in which the cutting insert 120 is comprised of a corner region 144 bounded by side segments 146 and intersecting the corner region 144 at points A and D. The corner region 144 has a penetrating segment 100 defined between points B and C with a radius r1. Furthermore, two finishing segments 105 are adjacent to the penetrating segment 100 and defined between points A-B and C-D, respectively. Each of the finishing segments 105 has a radius R1 which is larger than radius r1 of the penetrating segment 100. One finishing segment 105 intersects with the side segment 146 to form a clearance angle a1 between the cutting insert 120 and the direction of feed 148. The depth of cut is shown as item 155.

It should be noted that insert 120 has two finishing segments 105, one on each side of the penetrating segment 100. For purposes of this discussion, only that finishing segment 105 between points A-B along the workpiece 110 will be discussed with the understanding that the second finishing segment 105 between points C-D may be used for machining in a different direction than that shown by direction of feed 148 such as a direction perpendicular to direction of feed 148.

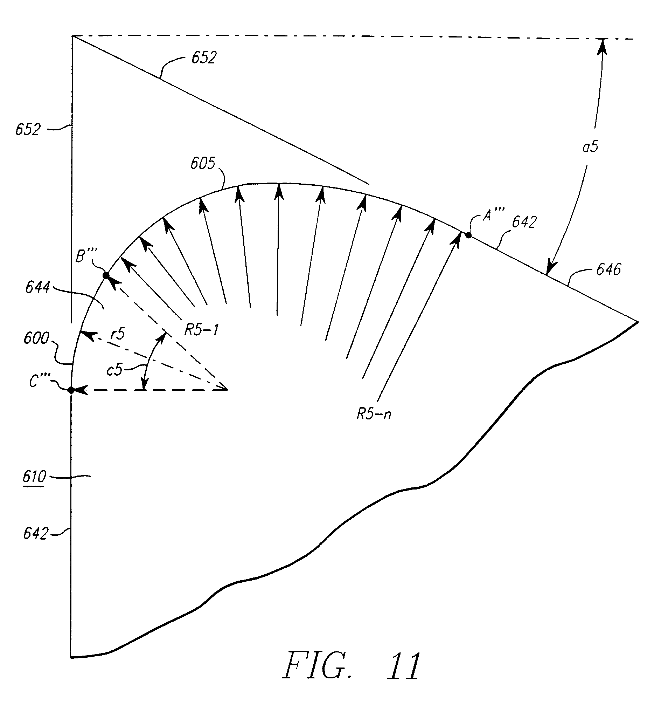

Furthermore, if the intended direction of feed is in the general direction of feed 148, then the finishing segment 105 between points C-D may be eliminated in favor of extending the penetrating segment 100 past point C to intersect directly with the side segment 146. Such a variation will be discussed with Figure 10.

In Figure 4, the corner region 144 of the insert 120 is symmetric about a bisector line 150 which bisects the angle b1 formed by the intersection of a line 152 extended from the cutting edge 142 of each adjacent side segment 146. This provides symmetry to the corner region 144. While Figure 4 is shown to be symmetric about the bisector line 150, benefits of the subject invention may be fully appreciated without such symmetry. It should further be appreciated that, while R1 in finishing segments 105 defined by A-B and C-D may be approximately equal, that is not required.

As seen in Figure 4, as a result of the present invention, even though the penetration of the workpiece 110 is performed by the penetrating section 100 and by that portion of a side segment 146 facing the direction of feed 148, the surface roughness of the workpiece 110 is a function of radius R1 for the finishing segment 105 between points A-B.

For this finishing segment 105 to engage the workpiece 110 and impart upon the workpiece 110 a radius R1, it is necessary that at least one point T on the finishing segment 105 has a tangent which is parallel to the direction of feed 148 of the cutting insert 120.

Under these circumstances, the finishing segment 105 will define the depth of cut 155 because that tangential point parallel to the direction of feed 148 will be the furthermost projection of the insert 120 into the workpiece 110. This is illustrated in Figure 4.

Point T in Figure 4 is the point on the finishing segment 105 that is tangential to the direction of feed 148. Improved surface roughness may be provided without the entire length of the finishing segment 105 engaging the workpiece 110. As shown in Figure 4, the entire portion of the finishing segment 105 forward of point T, that is, the portion on the side of the finishing segment 105 from point T toward the direction of feed 148, along with a portion of the finishing segment 105 on the opposite side of point T, engage the workpiece 110. As long as at least one portion of the finishing segment 105 engages the workpiece 110, the present invention may be used to improve surface roughness. However it is preferred that one point of the finishing segment 105 has a tangent which is parallel to the direction of feed 148.

To receive maximum benefits from such a configuration, the feed rate 160 should not exceed the maximum length of a chord 162 on the finishing segment 105 parallel to the direction of feed 148. A perpendicular line extended from the middle of such a chord 162 should intersect with point T. It is preferred that the finishing segment 105 be centered about this tangential point to maximize the influence of the finishing segment 105 on the surface roughness.

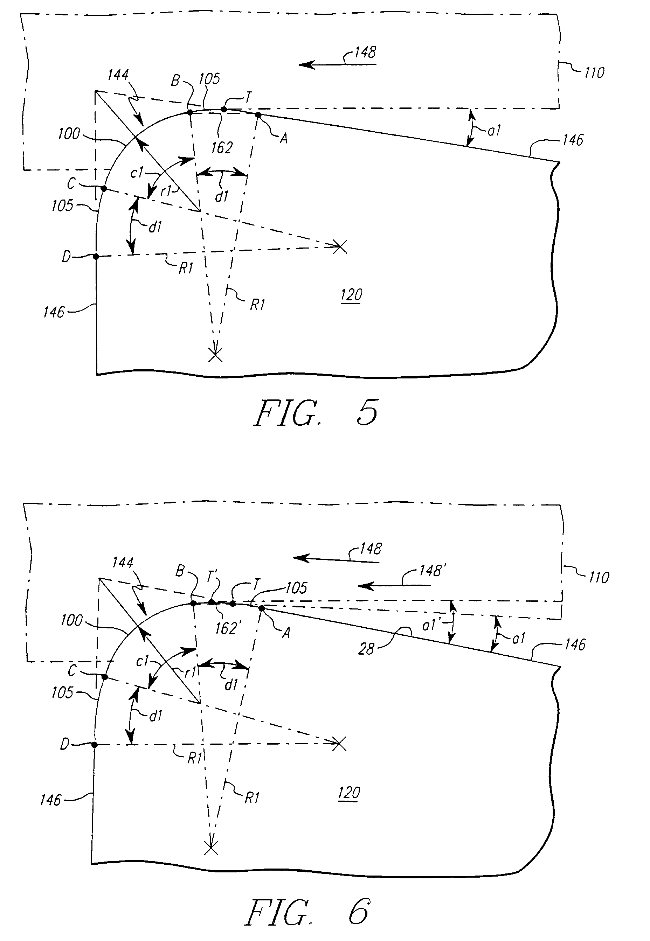

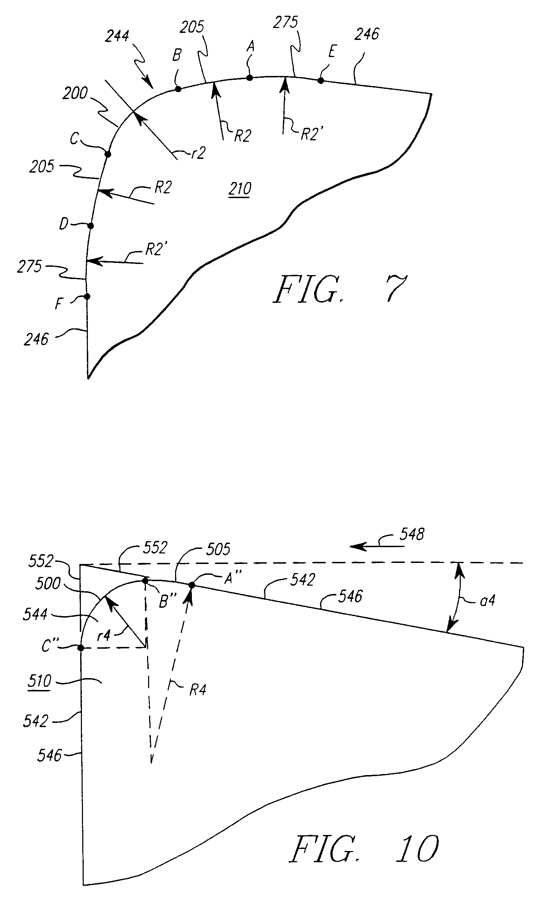

Figure 5 illustrates the same arrangement as Figure 4 but provides details of radii and relative angles for the arcs of the penetrating segment and the finishing segments. It should be noted that if the vector lengths of R1 and r1 shown in Figure 5 were taken to be the actual radii lengths, then R1 would be about three times longer than r1. However, in actuality, the length of R1 may be up to 50 times greater than the length of r1. As the radius R1 increases, the cutting forces upon the insert also increase to a point at which the benefit of improved surface roughness is offset by increased forces upon the insert. It should be understood that while generally the force increases as the radius R1 increases, the force is also influenced by the length of the arc on the portion of an insert which contacts the workpiece. An insert with a finishing segment having an arc d1 of 5 degrees and a radius R1 contacting the workpiece will experience lower cutting forces than an insert with a finishing segment having an arc d1 of 15 degrees and a radius R1 which contacts the workpiece. Additionally, as d1 increases, the arc c1 of the penetrating segment 100 will decrease.

It has been found that a CNMG-432 insert, having the following features will provide an improved surface roughness over an unmodified CNMG-432 insert in the same toolholder:

$r1 = 0.03125$ inch      $c1 = 100$ degrees
$R1 = 0.20$ inch      $d1 = 10$ degrees
feed rate $= 0.020$ inch/revolution

With these values, the average surface roughness based on the equation for surface roughness previously discussed, a surface roughness of 64 micro-inches is possible.

As a comparison, using a corner region having a single radius r of 0.03125 inches and a feed rate of 0.020 inch, the surface roughness is 411 micro-inches. Utilizing this design of the subject invention provides an improvement in surface roughness of 84%.

It should be noted that the CNMG-432 insert modified in accordance with the present invention was interchangeable with unmodified CNMG-432 inserts. No modifications to other hardware, such as toolholders and insert holding mechanisms, are necessary to receive the benefits of this invention.

Additionally, the present invention, by incorporating a curved surface of a larger radius R1 within the corner region 144, is more forgiving than a straight surface that might be used in lieu of the curved surface for improved surface roughness. If a straight surface were used, then the exact alignment of that surface parallel to the direction of feed would be critical. However, the finishing surface 105 of the present invention is tolerant of angular misalignments such as tolerances inherent within the manufacturing processes of both the toolholder and the insert. While, ideally, the tangential point T should be at the midpoint of the finishing segment 105, thereby providing the greatest amount of finishing segment 105 engaged with the workpiece 110, the insert 120 will still be effective if this is not the case and there is misalignment of the insert or if the direction feed is changed through a range of angular positions of the insert with respect to the workpiece. Such misalignment could be caused by mispositioning of the insert within the toolholder or caused by varying the direction of feed while cutting.

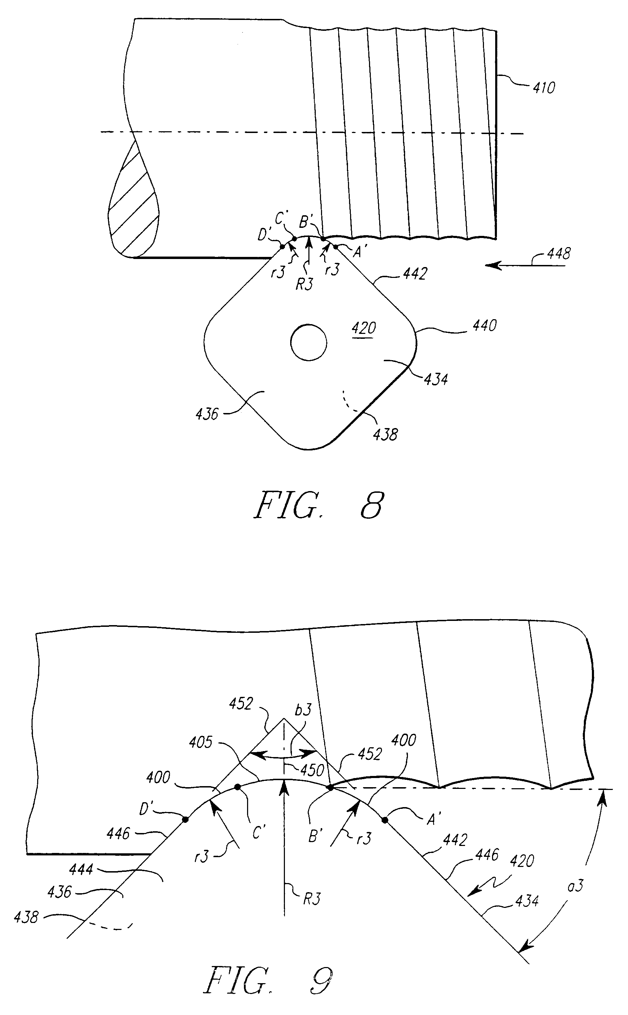

Specifically, as seen in Figure 6, the direction of feed 148' has been slightly angled relative to the insert 120 thereby displacing the tangent point to point T' and defining a chord 162' centered about point T'. As a result, the clearance angle has also changed from a1 to a1'. There is tolerance for angular rotation of the direction of feed 148' relative to the insert 120 when the tangent point T' is not at the center of the finishing segment 105.

For reference, Figure 5 is identical to Figure 6 with the exception of the direction of feed 148' and the resultant relative change in orientation between the workpiece 110 and the insert 120.

Even if the feed rate of the insert 120 exceeds the maximum length of the chord 162' on the finishing segment 105 parallel to the direction of feed 148', the present invention will still provide an improved surface roughness. However, the improved surface roughness will be produced by both the penetrating segment radius and the finishing segment radius and the surface roughness will be improved but not to the same degree as that provided with only the finishing segment engaged.

In such cases, referring to Figure 4, there will be portions of the workpiece 110 having scallops 175 with a portion of the scallop 175 having the radius r1 (not shown) of the penetrating segment 100 and another portion with the radius R1 of the finishing segment 105 between points A-B. Under these circumstances, it is desirable that the transition shown as point B (Fig. 6) between penetrating segment 100 and the finishing segment 105, be a smooth, continuous transition to prevent any sharp corners from contacting the workpiece. To that end, the slope of the penetrating segment 100 and the finishing segment 105, at their intersection point B, are preferably equal. In the same fashion, if the insert 110 is oriented such that point A, which is the transition point between the finishing segment 105 and the side segment 146, is engaged, then the slope of the finishing segment 105 and the side segment 146, at their intersection point A, are preferably equal.

In addition to this, some benefit may be received even if no point of the finishing segment 105 is tangent to the direction of the feed, as long as a portion of the finishing segment engages the workpiece 110. The larger radius of the finishing segment 105 will provide an improved surface roughness, relative to that roughness provided by the penetrating segment 100, over any portion of the workpiece 110 it engages.

What has been described in Figures 4-6 is a cutting insert 110 having a corner region 144 with a penetrating segment 100 to engage a workpiece 110 and a finishing segment 105 to improve the surface roughness of the workpiece 110. The finishing segment 105 was blended with the penetrating segment 100 at point B and with the side segment 146 at point A. However, in an alternative embodiment, the finishing segment 105 does not blend directly with the side segment 146.

Figure 7 shows a corner region 244 of an insert 210 having a penetrating segment 200 with radius r2, and two finishing segments 205 with radius R2.

It is only necessary to provide a finishing segment 205 on the insert 210 of sufficient length to provide for anticipated feed rates. For that reason, and for dimensional control of the location of the penetrating segment 200 on the insert 210, a transitional segment 275 may be introduced between the finishing segment 205 and the side segment 246. Such a segment 275 is bounded by points A and E, and D and F, respectively. The transition segment 275 may have a radius R2' which is less than the finishing segment 205 radius R2.

The symmetrical configuration of the corner region so far discussed has focused on a single side of that corner region addressing a single direction of feed.

Unlike Figures 4-6, Figures 8 and 9 illustrate an insert configuration in which a finishing segment 405 is flanked by two penetrating segments 400. Figure 8 shows a cutting insert 420 having a polygonal body 434 with a top surface 436, a bottom surface 438 and a peripheral wall 440 therebetween. A cutting edge 442 is formed at the intersection of the peripheral wall 440 and the top surface 436. A cutting edge may also be formed at the intersection of the peripheral wall 440 and the bottom surface 438. Figure 9 illustrates a magnified portion of Figure 8.

While the insert 420 shape is different from the insert 120 found in Figures 4 and 5, the features are similar in that the penetrating segment 400 initially engages the workpiece 410 and the finishing segment 405 follows to improve the surface roughness of the workpiece 410. The same discussion of the finishing segment function provided earlier applies here.

The cutting insert 420 is comprised of a corner region 444 bounded by side segments 446 and intersecting with these segments at points A' and D'. The corner region 444 has a finishing segment 405 defined between points B' and C' with a radius R3. Furthermore, two penetrating segments 400 are adjacent to the finishing segment 405 and defined between points A'-B' and C'-D', respectively. Each of the penetrating segments has a radius r3 which is smaller than the radius R3 of the finishing segment 405. The penetrating segment 400 between points A'-B' intersects with the side segment 446 to form a clearance angle a3 between the workpiece 410 and the cutting insert 420.

It should be noted that insert 420 has two penetrating segments 400, one on each side of the finishing segment 405. For purposes of improved surface roughness, only the penetrating segment 400 between points C'-D' along the workpiece 410 will be discussed with a direction of feed 448, with the understanding that the second penetrating segment 400 between points A'-B' would be engaged in a similar manner if the direction of feed was directly opposite to that of direction of feed 448. In the alternative, the second penetrating segment 400 between points A'-B' could be eliminated if the only feed occurred within the direction of feed 448.

In order to operate in the direction of feed 448 or opposite to that direction of feed, the corner region 444 is preferably symmetric about a bisector line 450, bisecting an angle b3 formed by the intersection of a line 452 extended from the cutting edge 442 of each adjacent side segment 446. Furthermore, for best performance, the insert 420 should be oriented relative to the workpiece such that the bisection line 450 is perpendicular to the direction of feed 448.

The configuration of insert 420 in Figure 8 and 9 may be similar to that discussed in Figures 4 to 7, but with the substitution of positions for the penetrating segment 400 and finishing segment 405. However, just as before, for improved surface roughness, the penetrating segment 400 will initially contact the workpiece 410 and the finishing segment 405 will follow. For the finishing segment 405 to engage the workpiece 410 and impart an improved surface roughness, it is preferable that at least one point on the finishing segment 405 has a tangent point which is parallel to the direction of feed 448 of the cutting insert 420. However as discussed earlier, it is possible to produce an improved surface roughness by engaging any portion of the finishing segment with the workpiece.

It should be realized in the instant case that the direction of feed 448 could be reversed and the insert 410 would operate just as effectively.

What has been discussed so far focuses on symmetric corner regions. Figure 10 shows an insert 510 in which the corner region 544 is not symmetric about a bisector line which would bisect an angle formed by the intersection of a line 552 extended from the cutting edge 542 of each adjacent side segment 546. In this instance, the elimination of one finishing segment causes asymmetry in the corner region 544. While finishing segment 505 with radius R4 exists between points A" and B" and a penetrating segment 500 with radius r4 is adjacent to that between points B" and C", the penetrating segment 500 blends directly with side segment 546 at point C". In this instance, improved surface roughness is possible by engaging the finishing segment 505 between points A"-B" with the workpiece (not shown). For reference, a direction of feed 548 and clearance angle a4 have been shown with the understanding that, just as before, the tangent of a point along the finishing segment 505 should preferably be parallel to the direction of feed.

So far configurations have been discussed in which the penetrating segment has a single radius and the finishing segment has a larger single radius. It is entirely possible to provide a finishing segment having a plurality of radii greater than that of the penetrating segment increasing from a minimum at the penetrating segment to a desired larger radius which would then blend with the side segment or with a transition segment. Under such circumstances, for example, the insert 120 shown in Figure 4 should have a penetrating segment 100 with radius r1, but would then have a finishing segment 105 with radius R1 at point B and another larger radius R1 at point A with a series of segments having increasing radii from point B to point A, such that a smooth curve would be presented. Although the surface roughness would improve, the roughness will be a function of the finishing segment radius which engages the workpiece. Just as before, it is preferable that at least one point of the finishing segment has a point which is tangential to the direction of feed.

Figure 11 shows such an arrangement. Just as with Figure 10, an insert 610 is shown in which the corner region 644 is not symmetric about a bisector line which would bisect an angle formed by the intersection of line 652 extended from the cutting edge 642 of each adjacent side segment 646. This is illustrated as an example with the understanding it is entirely possible for the corner region 644 to have symmetry about a bisector line.

A penetrating segment defined by points B'''-C''' in the corner region 644 of the insert 610 has a single radius r5 which blends with the finishing segment 605 defined by points A'''-B'''. The finishing segment 605 is comprised of a curve of continuously increasing radii R5-1 to R5-n with each radius greater than that of the penetrating segment 600 to a maximum at the end of the finishing segment 605 away from the penetrating segment 600. Just as before, a smooth continuous transition between the penetrating segment 600 and the finishing segment 605 may be desired. Under such circumstances, the slope of the penetrating segment 600 and the finishing segment 605, at their intersecting point B''', should preferably be equal. In the same fashion, if the insert 610 is oriented such that point A''', which is the transition point between the finishing segment 605 and the side segment 646, is engaged, then the slope of the finishing segment 605 and the side segment 646, at their intersection point A''', should preferably be equal. While not shown in Figure 11, it is possible to include in this embodiment a transition segment similar to that discussed with Figure 7 which has a radius less than that of the greatest radius of the finishing segment 605.

It is also possible for the finishing segment 605 to occupy a substantial portion of the corner region 644 such that the penetrating segment 600 is greatly diminished relative to the finishing segment 605. Specifically, the arc c5 of penetrating segment 600 may be less than two degrees. Under these conditions, the corner region 644 becomes a continuous curve in which the radius at point C''' is fixed and the curve extending to A''' is comprised of a series of segments with increasing radii to a maximum radius at point A''', which is the end of the finishing segment 605.

With each of these embodiments, it is possible to develop all off the corner regions on a given insert on either the top surface, bottom surface, or both. As such, the insert would be indexable and could also be invertible. However, in the configuration shown in Figure 11, it should be understood that the direction of feed would be limited by the asymmetric nature of the corner region.

What has been described is a cutting insert having a corner region with at least two different radii comprising a penetrating segment to establish an initial surface roughness and a finishing segment to improve such a surface roughness when machining a workpiece.

## Claims

1. A cutting insert (20) having a polygonal body (34) of wear resistant material for removing material from a workpiece (10) at a depth of cut (55) along a direction of feed (48) at a feed rate (60) in a turning operation having top and bottom surfaces (36,38) and a peripheral wall (40) therebetween and a cutting edge (42) formed at the intersection of the peripheral wall (40) and the top surface (36); wherein the insert (20) has:

    at least one corner region (44) and adjacent side regions (46), each corner region (44) being positioned about a bisector line (50) which bisects an angle formed by the intersection of a line extended from the cutting edge (42) of each adjacent side region (46), each corner region (44) comprised of

    (a) a penetrating segment (100) about the bisector line (50), the penetrating segment (100) having two ends (B,C) and a radius (r1) to enable the associated cutting edge (42) to remove material during penetration into the workpiece (10) at a depth of cut (55) and to generate a scalloped finish on the workpiece (10) and

    (b) a finishing segment (105) adjacent each end (B,C) of the penetrating segment (100) having two ends and a radius (R1) greater than that of the penetrating segment (100) and oriented relative to the workpiece (10) such that the tangent (T) of at least one intermediate point on the segment (105) is parallel to the direction of feed (48) and positioned to remove material from the scalloped finish to provide an improved surface roughness.

2. The cutting insert (20) according to claim 1 wherein the maximum length of a chord (162) on the finishing segment (105) parallel to the direction of feed (48) is greater than or equal to the feed rate (60).

3. The cutting insert (20) according to claim 1 wherein a chord (162) connecting the two ends of the finishing segment (105) is parallel to the direction of feed (48).

4. The cutting insert (20) according to claim 1 wherein the point of the finishing segment (105) with a tangent (T) parallel to the direction of feed (48) defines the depth of cut (55).

5. The cutting insert (20) according to claim 1 wherein the penetrating segment (100) and the finishing segment (105) are oriented upon the insert (20) so that the slope of each segment (100,105) at the point of intersection is equal.

6. The cutting insert (20) according to claim 1 wherein the finishing segment (105) and an adjacent side segment (46) are oriented upon the insert (20) so that the slope of each segment (46) at the point of intersection is equal.

7. The cutting insert (20) according to claim 1 further comprising a transition segment (275) between each finishing segment (205) and the associated adjacent side segment (246) with each transition segment (275) having a radius (R2') less than the radius (R2) of the finishing segment (205).

8. The cutting insert (20) according to claim 7 wherein the transition segment (275) and the finishing segment (205) are oriented upon the insert (20) so that the slope of each segment (205,275) at the point of intersection is equal.

9. The cutting insert (20) according to claim 7 wherein the transition segment (275) and an adjacent side segment (246) are oriented upon the insert (20) so that the slope at the point of intersection is equal.

10. The cutting insert (20) according to claim 1 wherein the radius (R1) of the finishing segment (105) is up to fifty times greater than the radius (r1) of the penetrating segment (100).

11. The cutting insert (20) according to claim 1 wherein the configuration of the bottom surface (38) is identical to that of the top surface (36) such that the insert (20) is invertible.

**Patentansprüche**

1. Schneideinsatz (20) mit einem polygonalen Körper (34) aus verschleißfestem Material zum Entfernen von Material mit einer Spanungsdicke (55) von einem Werkstück (10) in einer Vorschubrichtung (48) mit einer Vorschubrate (60) bei einem Drehvorgang, mit einer Ober- und einer Unterseite (36, 38) und einer dazwischen angeordneten Umfangswand (40) sowie einer Schneide (42), welche an der Verbindung der Umfangswand (40) und der Oberseite (36) gebildet ist; wobei der Einsatz (20) umfaßt:

wenigstens einen Eckbereich (44) und angrenzende Seitenbereiche (46), wobei jeder Eckbereich (44) an einer Winkelhalbierenden (50) angeordnet ist, die einen Winkel halbiert, der durch die Kreuzung einer sich von der Schneide (42) jedes angrenzenden Seitenbereichs (46) aus erstreckenden Linie gebildet ist, wobei jeder Eckbereich (44) besteht aus:

(a) einem Eindringsegment (100) um die Winkelhalbierende (50), wobei das Eindringsegement (100) zwei Enden (B, C) und einen Radius (r1) aufweist, um es der zugeordneten Schneide (42) zu ermöglichen, Material mit einer Spanungsdicke (55) beim Eindringen in das Werkstück (10) zu entfernen und ein wellenförmiges Finish auf dem Werkstück (10) zu erzeugen, und
(b) einem Endbearbeitungssegment (105), das an jedem Ende (B, C) des Eindringsegments (100) angrenzt und zwei Enden sowie einen Radius (R1) aufweist, der größer als der des Eindringsegments (100) ist und so zum Werkstück (10) ausgerichtet ist, daß die Tangente (T) wenigstens eines Zwischenpunktes auf dem Segment (105) parallel zur Vorschubrichtung (48) und so angeordnet ist, daß Material vom wellenförmigen Finish entfernt wird, um eine verbesserte Oberflächenneuigkeit zu schaffen.

2. Schneideinsatz (20) nach Anspruch 1, bei welchem die maximale Länge einer zur Vorschubrichtung (48) parallelen Sehne (162) auf dem Endbearbeitungssegment (105) größer als die oder gleich der Vorschubrate (60) ist.

3. Schneideinsatz (20) nach Anspruch 1, bei welchem eine die zwei Enden des Endbearbeitungssegments (105) verbindende Sehne (162) parallel zur Vorschubrichtung (48) ist.

4. Schneideinsatz (20) nach Anspruch 1, bei welchem der Punkt des Endbearbeitungssegments (105) mit einer zur Vorschubrichtung (48) parallelen Tangente (T) die Spanungsdicke (55) festlegt.

5. Schneideinsatz (20) nach Anspruch 1, bei welchem das Eindringsegment (100) und das Endbearbeitungssegment (105) so auf dem Einsatz (20) ausgerichtet sind, daß die Neigung jedes Segments (100, 105) am Schnittpunkt gleich ist.

6. Schneideinsatz (20) nach Anspruch 1, bei welchem das Endbearbeitungssegment (105) und ein angrenzendes Seitensegment (46) so auf dem Einsatz (20) ausgerichtet sind, daß die Neigung jedes Segments (46) am Schnittpunkt gleich ist.

7. Schneideinsatz (20) nach Anspruch 1, der ferner ein Übergangssegment (275) zwischen dem Endbearbeitungssegment (205) und dem zugeordneten angrenzenden Seitensegment (246) aufweist, wobei jedes Übergangssegment (275) einen Radius (R2') aufweist, der kleiner als der Radius (R2) des Endbearbeitungssegments (205) ist.

8. Schneideinsatz (20) nach Anspruch 7, bei welchem das Übergangssegment (275) und das Endbearbeitungssegment (205) so auf dem Einsatz (20) angeordnet sind, daß die Neigung jedes Segments (205, 275) am Schnittpunkt gleich ist.

9. Schneideinsatz (20) nach Anspruch 7, bei welchem das Übergangssegment (275) und ein angrenzendes Seitensegment (246) auf dem Einsatz (20) so ausgerichtet sind, daß die Neigung am Schnittpunkt gleich ist.

10. Schneideinsatz (20) nach Anspruch 1, bei welchem der Radius (R1) des Endbearbeitungssegments (105) bis zu fünfzigmal größer als der Radius (r1) des Eindringsegments (100) ist.

11. Schneideinsatz (20) nach Anspruch 1, bei welchem die Ausgestaltung der Unterseite (38) identisch zu der der Oberseite (36) ist, so daß der Einsatz (20) invertierbar ist.

## Revendications

1. Plaquette de coupe (20) présentant un corps polygonal (34) en matériau résistant à l'usure pour retirer de la matière d'une pièce travaillée (10) à une certaine profondeur de coupe (55) suivant une certaine direction d'avance (48) à un certain taux d'avance (60) dans une opération de tournage, comprenant des surfaces supérieure (36) et inférieure (38) et une paroi périphérique (40) entre elles et un bord de coupe (42) formé à l'intersection de la paroi périphérique (40) et de la surface supérieure (36); dans laquelle la plaquette (20) présente:

   au moins une région de coin (44) et des régions latérales adjacentes (46), chaque région de coin (44) étant positionnée autour d'une ligne bissectrice (50) qui partage un angle formé par l'intersection de lignes prolongeant le bord de coupe (42) de chacune des régions latérales adjacentes (46), chaque région de coin (44) comprenant:

   (a) un segment pénétrant (100) autour de la ligne bissectrice (50), le segment pénétrant (100) présentant deux extrémités (B, C) et un rayon (rl) permettant au bord de coupe (42) associé de retirer de la matière pendant sa pénétration dans la pièce travaillée (10) à une certaine profondeur de coupe (55) et de produire une finition dentelée sur la pièce travaillée (10); et

   (b) un segment de finition (105) adjacent à chaque extrémité (B, C) du segment pénétrant (100), présentant deux extrémités et un rayon (R1) supérieur à celui du segment pénétrant (100) et orienté par rapport à la pièce travaillée (10) de façon telle que la tangente (T), en au moins un point intermédiaire sur le segment (105), est parallèle à la direction d'avance (48), et positionné de manière à retirer de la matière de la finition dentelée pour fournir une rugosité de surface améliorée.

2. Plaquette de coupe (20) selon la revendication 1, dans laquelle la longueur maximale d'une corde (162) sur le segment de finition (105) parallèle à la direction d'avance (48) est supérieure ou égale au taux d'avance (60).

3. Plaquette de coupe (20) selon la revendication 1, dans laquelle une corde (162) reliant les deux extrémités du segment de finition (105) est parallèle à la direction d'avance (48)

4. Plaquette de coupe (20) selon la revendication 1, dans laquelle le point du segment de finition (105) ayant une tangente (T) parallèle à la direction d'avance (48) définit la profondeur de coupe (55).

5. Plaquette de coupe (20) selon la revendication 1, dans laquelle le segment pénétrant (100) et le segment de finition (105) sont orientés sur la plaquette (20) de façon telle que la pente de chaque segment (100, 105) au point d'intersection est égale.

6. Plaquette de coupe (20) selon la revendication 1, dans laquelle le segment de finition (105) et un segment latéral adjacent (46) sont orientés sur la plaquette (20) de façon telle que la pente de chaque segment (46) au point d'intersection est égale.

7. Plaquette de coupe (20) selon la revendication 1, comprenant en outre un segment de transition (275) entre chaque segment de finition (205) et le segment latéral adjacent (246) associé, chaque segment de transition (275) présentant un rayon (R2') inférieur au rayon (R2) du segment de finition (205).

8. Plaquette de coupe (20) selon la revendication 7, dans laquelle le segment de transition (275) et le segment de finition (205) sont orientés sur la plaquette (20) de façon telle que la pente de chaque element (205, 275) au point d'intersection est égale.

9. Plaquette de coupe (20) selon la revendication 7, dans laquelle le segment de transition (275) et un segment latéral adjacent (246) sont orientés sur la plaquette (20) de façon telle que leurs pentes au point d'intersection sont égales.

10. Plaquette de coupe (20) selon la revendication 1, dans laquelle le rayon (R1) du segment de finition (105) est jusqu'à cinquante fois plus grand que le rayon (r1) du segment pénétrant (100).

11. Plaquette de coupe (20) selon la revendication 1, dans laquelle la configuration de la surface inférieure (38) est identique à celle de la surface supérieure (36), de sorte que la plaquette (20) est réversible.

FIG. 1

PRIOR ART

FIG. 2

PRIOR ART

FIG. 3

PRIOR ART

FIG. 4

EP 0 706 433 B1

FIG. 5

FIG. 6

12

FIG. 7

FIG. 10

FIG. 8

FIG. 9

14

FIG. 11